# EUROPEAN PATENT SPECIFICATION

(11) **EP 3 138 727 B1**
(45) Date of publication and mention of the grant of the patent: **28.03.2018**
(21) Application number: 16186099.4
(22) Date of filing: 29.08.2016
(51) Int. Cl.: B60N 2/20, B60N 2/22, A47C 7/40

(54) **SYSTEM FOR ADJUSTING AND RELEASING A FOLDING BACKREST OF A SEAT OF A VEHICLE, IN PARTICULAR A MOTOR VEHICLE**
SYSTEM ZUR EINSTELLUNG UND ZUM LÖSEN EINER KLAPPBAREN RÜCKENLEHNE EINES FAHRZEUGSTUHLS, INSBESONDERE EINES MOTORFAHRZEUGS
SYSTÈME POUR LE RÉGLAGE ET LE RELACHEMENT D'UN DOSSIER PLIABLE DE SIÜGE DE VÉHICULE, EN PARTICULIER D'UN VÉHICULE MOTORISÉ

(30) Priority: 01.09.2015 IT UB20153329
(43) Date of publication of application: 08.03.2017
(73) Proprietor: Proma S.p.A., 81020 S. Nicola La Strada (CE) (IT)
(72) Inventor: VERDE, Carlo, 80014 Giugliano (NA) (IT)
(74) Representative: Vitillo, Giuseppe

(56) References cited:
- EP-A1- 1 516 773
- DE-A1- 19 940 813
- US-A- 3 817 571

## Description

### Technical field

The present invention relates to a system for adjusting and releasing a folding backrest of a seat of a vehicle, in particular a motor vehicle. The invention also relates to a vehicular seat provided with said adjustment and release system.

### Background art

Vehicular seats are notoriously equipped with a system for adjusting the inclination of the backrest, so that it can be adapted to the user's preference, e.g. by operating a knob or a lever. In addition, some seats include a mechanism (also known as "Easy-entry") for releasing the folding backrest of the seat and bringing it into a tilted condition, generally a position in which it is folded forwards towards the seat cushion, so as to allow, for example, passengers to enter and exit the vehicle; this is the typical case of motor vehicles equipped with two side doors and two rows of seats, i.e. a front one and a rear one. In this case, the front seats need to be folded in order to allow the passengers of the rear seats to easily enter and exit the vehicle.

However, such systems suffer from a few drawbacks.

One drawback is that the systems known in the art have a complex construction.

A further drawback is that the "easy entry" backrest folding system consists of a "Master" device arranged on the inner side of the vehicle, where also the inclination adjustment device is located, and a "Slave" device arranged on the outer side, towards the door. The lever that operates the easy-entry system is located on the outer side to allow the user to fold the seat. Since such systems do not operate simultaneously, malfunctions may occur, and the folding of the backrest is slow and unreliable.

US 3817571 A discloses a vehicle seat latching system for latching a pivoted backrest structure to a seat cushion supporting structure. The latching system comprises a spring-loaded pivoted latch device on the backrest structure engagable with a keeper device carried on the seat cushion supporting structure. A remote control mechanism responsive to movement of a vehicle door into or out of door closed position actuates a latch device displacement means. When the vehicle door is moved to an open position, movement is transmitted from a sensor device through a reciprocable wire element to the latch device displacement means which drives the latch device out of latching engagement with the keeper device to permit the seat backrest to be forwardly tiltable.

### Summary of the invention

It is one object of the present invention to provide an improved system for adjusting and releasing a folding backrest of a seat of a vehicle, which in particular can solve these and other problems of the prior art while being simple and economical to manufacture. A further object is to provide an adjustment and release system which is both compact and reliable. According to some preferred embodiments, it is a further object of the invention to position the inclination adjustment lever on the "Slave" device. According to the present invention, these and other objects are achieved through a system for adjusting and releasing a folding backrest of a seat of a vehicle which incorporates the technical features set out in the appended independent claim. It is to be understood that the appended claims are an integral part of the technical teachings provided in the following detailed description of the invention. In particular, the appended dependent claims define some preferred embodiments of the present invention, which include some optional technical features.

### Brief description of the drawings

Further features and advantages of the present invention will become apparent from the following detailed description, which is supplied by way of non-limiting example with particular reference to the annexed drawings, wherein:
- Figure 1 is an exploded perspective view according to one embodiment of the present invention;
- Figures 2a, 2b, 2c are side views showing a preferred embodiment of the invention in different operating conditions;
- Figure 3 is a side view showing the embodiment of the invention of Figures 2a, 2b, 2c in a further operating condition.

### Detailed description of the invention

With reference to the drawings, a system for adjusting and releasing a folding backrest of a seat of a vehicle, in particular a motor vehicle, will now be described, which comprises:
- a support structure 10 to be associated with the frame of the seat;
- a release lever 12 pivoted to a first point of the support structure and rotatable about a first axis of rotation x-x;
- an adjustment lever 14 pivoted to a second point of the support structure 10 and rotatable about a second axis of rotation y-y, which is substantially parallel to the first axis of rotation x-x;

The adjustment lever 14 is adapted to take, with respect to the support structure 10, an angular release position in which the backrest is free to move into a substantially folded position relative to the seat cushion.

The release lever 12 and the adjustment lever 14 are reciprocally shaped in a manner such that the release lever 12 and the adjustment lever 14 can be put into:
an engaged condition, wherein they are mutually constrained in rotation, and wherein the adjustment lever 14 is prevented from moving into the angular release position, so that the inclination of the backrest can be adjusted by applying a torque to the adjustment lever 14, and
a released condition, obtainable by rotating the release lever 12 relative to the support structure 10, wherein the release lever 12, as it rotates, brings the adjustment lever 14 into the angular release position.

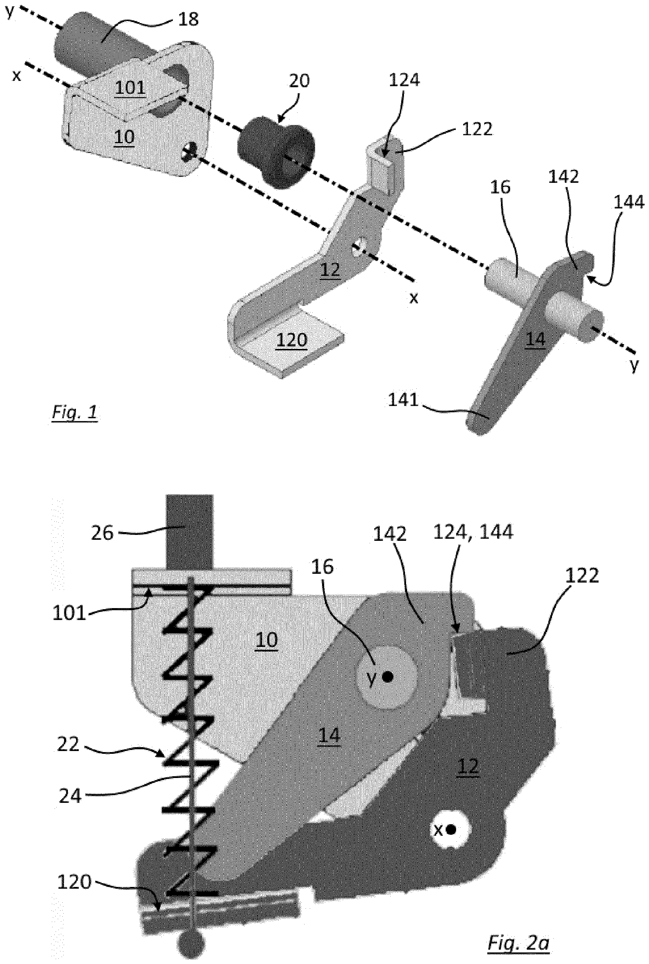

In the engaged condition, the expression "constrained in rotation" includes the possibility that the levers 12 and 14 may have a relative rotary play, as visible, for example, in Figs. 2a-2c.

The seat whereon the system of the present invention is advantageously installed has a folding backrest that is susceptible of taking a substantially upright position and a substantially folded position relative to the seat cushion. When the adjustment lever 14 is put into the angular release position, the backrest will be released from the cushion and will be free to move into the substantially folded position; and when the release lever 12 and the adjustment lever 14 are put into the engaged position, the backrest will be kept in the substantially upright position and the inclination of the backrest can be adjusted by applying a torque to the adjustment lever 14.

The system and the seat can conveniently be installed in a two-door vehicle having a row of front seats and a row of rear seats.

The adjustment lever 14 is intended to be operated by a user in order to adjust the inclination of the folding backrest of the seat, when said backrest is in the substantially upright condition for accommodating and supporting the user's back.

In other words, the normal operating condition of the seat corresponds to the substantially upright position, in turn corresponding to the engaged condition of the levers 12 and 14, in which the user can adjust the inclination of the backrest by turning the adjustment lever 14. On the contrary, when the user wants to fold the backrest, he/she will apply a torque to the release lever 12 to rotate it; said release lever 12 will turn the adjustment lever 14 into the release position with respect to the support structure 10, thereby allowing the backrest to be released and folded.

Therefore, since the two axes of rotation (x-x and y-y) are substantially parallel and spaced apart, when the release lever 12 and the adjustment lever 14 are in the engaged condition and the user turns the adjustment lever 14, a torque will be generated that will also turn the support structure 10. The support structure 10 is meant to rotate about a respective axis which is parallel to the axes x-x and y-y, possibly coinciding with one of said axes x-x and y-y.

One of the most advantageous aspects of the invention relates to the fact that when the levers 12 and 14 are in the mutually engaged condition, if a torque is applied to the adjustment lever 14, said levers 12, 14 will remain in the engaged condition, thus also turning the support structure 10; instead, if a torque is applied to the release lever 12, said levers 12, 14 will switch into the released condition. Therefore, the transition from the engaged condition to the released condition will be subject to the application of a torque to the release lever 12, which can cause it to rotate relative to the support structure 10. In particular, in order to bring the levers 12, 14 into the released condition, it will be necessary to turn the release lever 12 in just one direction of rotation relative to the support structure 10 (counterclockwise in the illustrated example).

The support structure 10 and the release lever 12 can advantageously be coupled together by means of a through pin (not shown) inserted in a pair of holes. The support structure 10 and the adjustment lever 14 can advantageously be coupled together by means of a through pin 16 inserted in respective holes. With particular reference to the example shown in Figure 1, a tubular element 18 rotatably integral with the support structure 10 is included, in which the pin 16 is at least partially inserted; advantageously, a bushing 20 is interposed between the tubular element 18 and the pin 16. In particular, the pin 16 and the lever 14 are rotatably integral with each other.

Preferably, the release lever 12 comprises a substantially planar sliding portion 120, whereon a first end 141 of the adjustment lever 14 slides as the release lever 12 and the adjustment lever 14 move towards the released position.

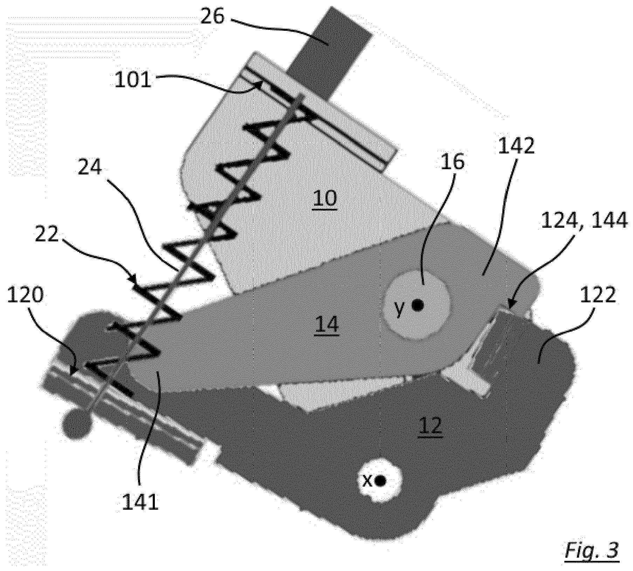

Advantageously, a second end 122 of the release lever 12 and a second end 142 of the adjustment lever 14 comprise respective protrusions and recesses, such that the release lever 12 and the adjustment lever 14 will be constrained in rotation when the adjustment lever 14 is operated in a direction of rotation (e.g. clockwise). The sliding portion 120 will constrain in rotation the release lever 12 and the adjustment lever 14 when the adjustment lever 14 is operated in the opposite direction of rotation (e.g. counterclockwise). By way of illustrative, non-limiting example, numeral 144 designates a recess on the second end 142 of the adjustment lever 14, and numeral 124 designates a protrusion on the second end 122 of the release lever 12. Advantageously, the protrusion 124 and the recess 144 have a substantially complementary profile, in particular an angular profile, preferably a right-angle profile (see, in particular, Figures 2a-2c, 3a). Alternatively, it is conceivable to provide an angular recess and a feeler protrusion, not complementary with the recess, adapted to come in contact and co-operate with said recess.

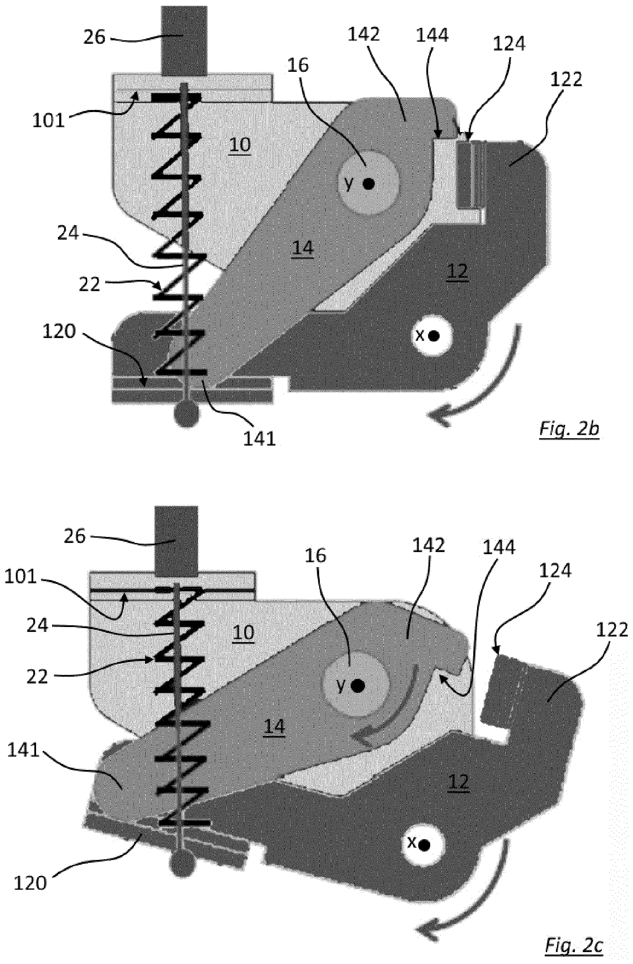

Figures 2a-2c show the operating sequence of the levers 12 and 14 during the transition from the engaged condition to the released condition. In Figure 2a the levers 12 and 14 are in a condition of mutual engagement; in particular, between the sliding portion 120 and the first end 141 there is a gap or clearance. Also, the protrusion 124 and the recess 144 are juxtaposed and co-operate together mechanically. In Figure 2b the release lever 12 has been slightly turned (counterclockwise), and the sliding portion 120 and the first end 141 are in mutual contact. The protrusion 124 and the recess 144 are slightly spaced apart. In Figure 2c the release lever 12 has been turned further, and therefore the protrusion 124 and the recess 144 are spaced apart and do not co-operate together mechanically; moreover, the first end 141, after having slid over the sliding portion 120, has taken the angular release position with respect to the support structure 10.

Figure 3 shows the system depicted in Figure 2a, wherein the levers 12 and 14 are in the engaged condition after a torque has been applied to the adjustment lever 14. As can be seen, the adjustment lever 14 has caused the release lever 12 and the support structure 10 to rotate. After the rotation of the assembly 10, 12, 14, the levers 12, 14 stay in the engaged condition, in that no torque has been applied to the release lever 12 for turning it relative to the support structure 10. Therefore, the relative positions of the elements 10, 12, 14 will remain substantially unchanged during the rotation.

Preferably, the system comprises a return means operating between the support structure 10 and the release lever 12, which will tend to keep the release lever 12 and the adjustment lever 14 in the engaged condition. This will counter any undesired rotation of the release lever 12 relative to the support structure 10, which might bring the levers 12, 14 into the released condition. Furthermore, when the user returns the backrest into the upright position, the levers 12, 14 will get into the engaged condition. In particular, the return means is an elastic means 22, such as a coil spring. With particular reference to the example illustrated herein, the elastic means 22 is interposed between the sliding portion 120 and an abutment portion 101 of the support structure 10. In particular, the elastic means works by compression (at least when the levers 12, 14 are in the engaged condition).

Preferably, the system comprises an actuator for rotating the release lever 12 with respect to the support structure 10 in order to bring the release lever 12 and the adjustment lever 14 into the released condition. Advantageously, the actuator comprises a mechanical member working by traction, such as a cable 24 or a rope, more preferably a Bowden cable, or a chain. Other *per se* known actuators may also be employed, e.g. a lever system or a gearing or a connecting rod. Preferably, the cable 24 (or, generally speaking, the member working by traction) is constrained to one end of the release lever 12, in particular to the sliding portion 120. The cable 24 runs through the abutment portion 101 through a hole or a slot provided in the same. In the preferred embodiment, the cable 24 is a Bowden cable that includes a sheath structure 26 resting on the support structure 10, in particular on the abutment portion 101. Of course, the countering means 22 and/or the actuator 24 act upon a part of the countering portion 120, so as to not interfere with the sliding action of the end 141 on said sliding portion 120.

With reference to the illustrated embodiment, the sliding portion 120 is substantially orthogonal to the body of the release lever 12. The protrusion 124 is also orthogonal to the body of the lever 12. The support structure 10 is a bracket having a substantially planar part whereto the levers 12 and 14 are pivoted, and the abutment portion 101 is substantially orthogonal to said substantially planar part.

The cable 24, and in general the actuator, can be operated by hand by a user. Conveniently, the cable 24 is intended for connection to an actuation portion associated with the seat, such as, for example, a lever or a handle arranged on the seat, advantageously on the door side of the seat, adapted to be gripped by a user in order to release and fold the backrest. With reference to the illustrated example, the cable 24, which is conveniently operated by a respective lever (Easy-entry lever), moves the release lever 12, which thus activates the adjustment lever 14, which in turn transfers the motion to the pin 16. Advantageously, in order to adjust the inclination of the seat, the user grasps and turns another actuation portion associated with the seat, such as, for example, a lever or a handle, which is mechanically connected to the adjustment lever 14, in order to rotate said lever 14.

The system of the invention is advantageously meant to be mounted on the side of the seat that faces towards the centre of the passenger compartment of the vehicle. The seat comprises a release mechanism that, when the adjustment lever 14 takes the angular release position, will release the backrest from the cushion, thereby allowing it to move into the substantially folded position. The seat comprises an adjustment mechanism that, when the adjustment lever 14 and the release lever 12 are the engaged condition and the backrest is in the substantially upright position, will allow adjusting the inclination of the backrest by operating the adjustment lever 14. This release mechanism and/or adjustment mechanism may be of a *per se* known type. Optionally, the release mechanism may comprise elastic means tending to bring the seat into the folded position or, alternatively, into the upright position, when the levers 12, 14 are moved into the released condition. The seat may also be mounted on guides associated with the vehicle, e.g. with the floor of the passenger compartment; in such a case, the release mechanism will allow the seat to slide on such guides when the levers 12, 14 are brought into the released condition, and will prevent it from sliding when the backrest is in the upright condition and the levers 12, 14 are in the engaged condition.

For example, the release lever 12 and the adjustment lever 14 comprise respective transmission means configured for controlling the actuation of the seat release mechanism. For example, the mutual positions of the pin 16 and of the tubular element 18, related to the mutual positions of the levers 12 and 14, will determine the activation of the seat release system, so that the backrest can be folded.

Of course, without prejudice to the principle of the invention, the forms of embodiment and the implementation details may be extensively varied from those described and illustrated herein by way of non-limiting example, without however departing from the scope of the invention as set out in the appended claims.

## Claims

1. System for adjusting and releasing a folding backrest of a seat of a vehicle, in particular a motor vehicle, comprising:
- a support structure (10) to be associated with the frame of said seat;
- a release lever (12) pivoted to a first point of said support structure and rotatable about a first axis of rotation (x-x);
- an adjustment lever (14) pivoted to a second point of said support structure (10) and rotatable about a second axis of rotation (y-y), which is substantially parallel to said first axis of rotation (x-x); said adjustment lever (14) being also adapted to take, with respect to said support structure (10), an angular release position in which said backrest is free to move into a substantially folded position relative to the seat cushion;
said release lever (12) and said adjustment lever (14) being reciprocally shaped in a manner such that said release lever (12) and said adjustment lever (14) can be put into
an engaged condition, wherein they are mutually constrained in rotation, and wherein said adjustment lever (14) is prevented from moving into the angular release position, so that the inclination of the backrest can be adjusted by applying a torque to said adjustment lever (14), and
a released condition, obtainable by rotating said release lever (12) relative to said support structure (10), wherein said release lever (12), as it rotates, brings said adjustment lever (14) into the angular release position;
wherein said release lever (12) comprises a substantially planar sliding portion (120), whereon a first end (141) of said adjustment lever (14) slides as said release lever (12) and said adjustment lever (14) move towards said released condition;
**characterized in that** a second end (122) of said release lever (12) and a second end (142) of said adjustment lever (14) comprise respective protrusions and recesses (124, 144), such that said release lever (12) and said adjustment lever (14) will be constrained in rotation when said adjustment lever (14) is operated in a direction of rotation;
said sliding portion (120) constraining in rotation said release lever (12) and said adjustment lever (14) when said adjustment lever (14) is operated in the opposite direction of rotation.

2. System according to claim 1, comprising a return means operating between said support structure (10) and said release lever (12), tending to hold said release lever (12) and said adjustment lever (14) in the engaged condition.

3. System according to claim 2, wherein said return means is an elastic means (22).

4. System according to any one of the preceding claims, comprising an actuator for rotating said release lever (12) relative to the support structure (10) in order to bring said release lever (12) and said adjustment lever (14) into the released condition.

5. System according to claim 4, wherein said actuator comprises a mechanical member working by traction, such as a cable or a rope.

6. System according to claims 1 and 3, wherein said elastic means (22) is interposed between said sliding portion (120) and an abutment portion (101) of said support structure (10).

7. System according to claims 1 and 5, wherein said mechanical member working by traction is constrained to said sliding portion (120).

8. Seat for a vehicle, in particular a motor vehicle, having a folding backrest susceptible of taking a substantially upright position and a substantially folded position relative to the seat cushion, the seat comprising:
- an adjustment and release system according to any one of the preceding claims; wherein
when said adjustment lever (14) is brought into the angular release position, said backrest is released from said seat and is free to move into the substantially folded position, and
when said release lever (12) and said adjustment lever (14) are brought into the engaged condition, said backrest is held in the substantially upright position and the inclination of said backrest can be adjusted by applying a torque to said adjustment lever (14).

## Patentansprüche

1. System zum Einstellen und Entriegeln einer klappbaren Rückenlehne eines Fahrzeugsitzes, insbesondere eines Kraftfahrzeugs, aufweisend:
- eine Trägerstruktur (10), die mit dem Rahmen des Sitzes verbunden sein kann;
- einen Entriegelungshebel (12), der zu einem ersten Punkt der Trägerstruktur geschwenkt ist und drehbar um eine erste Drehachse (x-x) ist;
- einen Einstellhebel (14), der zu einem zweiten Punkt der Trägerstruktur (10) geschwenkt ist und drehbar um eine zweite Drehachse (y-y) ist, welche im Wesentlichen parallel zu der ersten Drehachse (x-x) ist; wobei der Einstellhebel (14) auch angepasst ist, in Bezug auf die Trägerstruktur (10), eine schräge Entriegelungsposition einzunehmen, in welcher die Rückenlehne frei ist, sich in eine im Wesentlichen geklappte Position des Sitzes in Bezug auf das Sitzpolster zu bewegen;
wobei der Entriegelungshebel (12) und der Einstellhebel (14) in einer solchen Weise gegenseitig geformt sind, dass der Entriegelungshebel (12) und der Einstellhebel (14) gebracht werden können in
einen eingerasteten Zustand, wobei sie sich gegenseitig in der Drehung hemmen, und wobei der Einstellhebel (14) daran gehindert wird, sich in die schräge Entriegelungsposition zu bewegen, sodass die Neigung der Rückenlehne durch aufbringen eines Drehmoments auf den Einstellhebel (14) eingestellt werden kann, und
einen entriegelten Zustand, erhältlich durch Drehen des Entriegelungshebels (12) relativ zu der Trägerstruktur (10), wobei der Entriegelungshebel (12), während er sich dreht, den Einstellhebel (14) in die schräge Entriegelungsposition bringt;
wobei der Entriegelungshebel (12) einen im Wesentlichen ebenen Gleitabschnitt (120) aufweist, worauf ein erstes Ende (141) des Einstellhebels (14) gleitet, wenn der Entriegelungshebel (12) und der Einstellhebel (14) sich in Richtung des entriegelten Zustands bewegen;
**dadurch gekennzeichnet, dass** ein zweites Ende (122) des Entriegelungshebels (12) und ein zweites Ende (142) des Einstellhebels (14) entsprechende Vorsprünge und Ausnehmungen (124, 144) aufweisen, sodass der Entriegelungshebel (12) und der Einstellhebel (14) in Drehung gehemmt werden, wenn der Einstellhebel (14) in einer Drehrichtung betätigt wird;
wobei der Gleitabschnitt (120) die Drehung des Entriegelungshebels (12) und des Einstellhebels (14) hemmt, wenn der Einstellhebel (14) in der gegenteiligen Drehrichtung betätigt wird.

2. System gemäß Anspruch 1, ein Rückstellmittel zwischen der Trägerstruktur (10) und dem Entriegelungshebel (12) aufweisend, das dazu neigt, den Entriegelungshebel (12) und der Einstellhebel (14) im eingerasteten Zustand zu halten.

3. System gemäß Anspruch 2, wobei das Rückstellmittel ein elastisches Mittel (22) ist.

4. System gemäß einem der vorstehenden Ansprüche, einen Betätiger zum Drehen des Entriegelungshebels (12) bezogen auf die Trägerstruktur (10) aufweisend, um den Entriegelungshebel (12) und den Einstellhebel (14) in den entriegelten Zustand zu bewegen.

5. System gemäß Anspruch 4, wobei der Betätiger ein mechanisches Element aufweist, welches mit Zugkraft arbeitet, wie z. B. ein Kabel oder ein Seil.

6. System gemäß den Ansprüchen 1 und 3, wobei das Rückstellmittel (22) zwischen dem Gleitabschnitt (120) und einem Auflagerabschnitt (101) der Trägerstruktur (10) angeordnet ist.

7. System gemäß Anspruch 1 und 5, wobei das mechanische Element, welches mit Zugkraft arbeitet, auf den Gleitabschnitt (120) beschränkt ist.

8. Sitz für ein Fahrzeug, insbesondere ein Kraftfahrzeug, mit einer klappbarer Rückenlehne, welche beeinflussbar ist, eine im Wesentlichen aufrechte Position und eine im Wesentlichen geklappte Position in Bezug auf das Sitzpolster einzunehmen, wobei der Sitz aufweist:
- ein Einstell- und Entriegelungssystem gemäß einem der vorstehenden Ansprüche; wobei
wenn der Einstellhebel (14) in die schräge Entriegelungsposition gebracht wird, die Rückenlehne aus dem Sitz entriegelt wird und frei ist, sich in die im Wesentlichen geklappte Position zu bewegen, und
wenn der Entriegelungshebel (12) und der Einstellhebel (14) in den eingerasteten Zustand gebracht werden, die Rückenlehne in der im Wesentlichen aufrechten Position gehalten wird und die Neigung der Rückenlehne durch aufbringen eines Drehmoments auf den Einstellhebel (14) eingestellt werden kann.

## Revendications

1. Système de réglage et de déverrouillage d'un dossier rabattable d'un siège d'un véhicule, en particulier, d'un véhicule à moteur, comprenant :
- une structure de support (10) à associer à l'armature dudit siège ;
- un levier de déverrouillage (12) pivoté vers un premier point de ladite structure de support et pouvant pivoter autour d'un premier axe de rotation (x-x) ;
- un levier de réglage (14) pivoté vers un second point de ladite structure de support (10) et pouvant pivoter autour d'un second axe de rotation (y-y), qui est sensiblement parallèle audit premier axe de rotation (x-x) ; ledit levier de réglage (14) étant également conçu pour prendre, par rapport à ladite structure de support (10), une position de déverrouillage angulaire dans laquelle ledit dossier est libre de se mouvoir dans une position sensiblement pliée par rapport au coussin de siège ;
ledit levier de déverrouillage (12) et ledit levier de réglage (14) étant réciproquement formés de manière à ce que ledit levier de déverrouillage (12) et ledit levier de réglage (14) puissent être placés dans une condition engagée, dans laquelle ils sont mutuellement maintenus en rotation, et dans lequel ledit levier de réglage (14) est empêché de se mouvoir dans la position de déverrouillage angulaire, de sorte que l'inclinaison du dossier peut être réglée en appliquant un couple audit levier de réglage (14), et
une condition déverrouillée, pouvant être obtenue en tournant ledit levier de déverrouillage (12) par rapport à ladite structure de support (10), dans laquelle ledit levier de déverrouillage (12), lorsqu'il tourne, amène ledit levier de réglage (14) dans la position de déverrouillage angulaire ;
dans lequel ledit levier de déverrouillage (12) comprend une partie coulissant sensiblement planaire (120), sur laquelle une première extrémité (141) dudit levier de réglage (14) coulisse lorsque ledit levier de déverrouillage (12) et ledit levier de réglage (14) se déplacent vers ladite condition déverrouillée ;
**caractérisé en ce qu'**une seconde extrémité (122) dudit levier de déverrouillage (12) et une seconde extrémité (142) dudit levier de réglage (14) comprennent des saillies et des creux respectifs (124, 144), de sorte que ledit levier de déverrouillage (12) et ledit levier de réglage (14) seront maintenus en rotation lorsque ledit levier de réglage (14) est actionné dans un sens de rotation ;
ladite partie coulissante (120) maintenant en rotation ledit levier de déverrouillage (12) et ledit levier de réglage (14) lorsque ledit levier de réglage (14) est actionné dans le sens de rotation opposé.

2. Système selon la revendication 1, comprenant un moyen de retour fonctionnant entre ladite structure de support (10) et ledit levier de déverrouillage (12), tendant à maintenir ledit levier de déverrouillage (12) et ledit levier de réglage (14) dans la condition engagée.

3. Système selon la revendication 2, dans lequel ledit moyen de retour est un moyen élastique (22).

4. Système selon l'une quelconque des revendications précédentes, comprenant un actionneur pour faire tourner ledit levier de déverrouillage (12) par rapport à la structure de support (10) de manière à amener ledit levier de déverrouillage (12) et ledit levier de réglage (14) dans la condition déverrouillée.

5. Système selon la revendication 4, dans lequel ledit actionneur comprend un élément mécanique travaillant par traction, tel qu'un câble ou une corde.

6. Système selon les revendications 1 et 3, dans lequel ledit moyen élastique (22) est interposé entre ladite partie coulissante (120) et une partie en butée (101) de ladite structure de support (10).

7. Système selon les revendications 1 et 5, dans lequel ledit élément mécanique travaillant par traction est maintenu vers ladite partie coulissante (120).

8. Siège pour un véhicule, en particulier, pour un véhicule à moteur, ayant un dossier rabattable susceptible de prendre une position sensiblement verticale et une position sensiblement pliée par rapport au coussin de siège, le siège comprenant :
- un système de réglage et de déverrouillage selon l'une quelconque des revendications précédentes ; dans lequel
lorsque ledit levier de réglage (14) est amené dans la position de déverrouillage angulaire, ledit dossier est dégagé dudit siège et est libre de se mouvoir dans la position sensiblement pliée, et
lorsque ledit levier de déverrouillage (12) et ledit levier de réglage (14) sont amenés dans la condition engagée, ledit dossier est maintenu dans la position sensiblement verticale et l'inclinaison dudit dossier peut être réglée en appliquant un couple audit levier de réglage (14).
